# EUROPÄISCHE PATENTSCHRIFT

(11) **EP 0 928 914 B1**
(45) Veröffentlichungstag und Bekanntmachung des Hinweises auf die Patenterteilung: **28.02.2001**
(21) Anmeldenummer: 98124152.4
(22) Anmeldetag: 19.12.1998
(51) Int. Cl.: F16J 15/34, F04D 29/12, F04D 13/06

(54) **Kreiselmotorpumpe mit Gleitringdichtung**
Centrifugal pump with sealing ring
Pompe centrifuge avec bague d'étanchéité

(30) Priorität: 07.01.1998 DE 19800302
(43) Veröffentlichungstag der Anmeldung: 14.07.1999
(73) Patentinhaber: WILO GmbH, D-44263 Dortmund (DE)
(72) Erfinder: Kaul, Günter, 58456 Witten (DE)
(74) Vertreter: COHAUSZ HANNIG DAWIDOWICZ & PARTNER

(56) Entgegenhaltungen:
- EP-A- 0 068 948
- EP-A- 0 114 227
- DE-A- 3 110 300
- US-A- 3 366 068
- US-A- 3 395 644

## Beschreibung

Die vorliegende Erfindung betrifft eine Kreiselmotorpumpe mit einem Spaltrohr, wobei die das Laufrad tragende Welle des Rotors in einem ein Radiallager bildenden Gegenlagerring gelagert ist und wobei das Laufrad auf seiner dem Rotor zugewandten Seite eine Gleitringdichtung mit einem Gleitring aufweist, der auf der Stirnseite des Gegenlagerringes gleitend aufliegt und so den Pumpenraum gegen den über den Lagerspalt zwischen der Welle und dem Gegenlagerring zugänglichen Rotorraum abdichtet.

Eine derartige Pumpe mit einem Radialgleitlager und einer axial wirkenden Gleitringdichtung zur Abdichtung des Rotorraumes gegenüber der Pumpenkammer ist beispielsweise aus der US 3,395,644 bekannt. Bekanntermaßen müssen die Gleitlager in Pumpen ausreichend geschmiert werden, damit sie nicht heiß laufen und es zu einer Zerstörung der Gleitflächen kommt. Eine ausreichende Schmierung wird dadurch gewährleistet, daß der hinter dem Lagerschild liegende Rotorraum mit Pumpmedium befüllt wird. Um jedoch den kontinuierlichen Austausch von Medium im Rotorraum zu verhindern, wird der Rotorraum durch ein Rückschlagventil vom Pumpenraum getrennt. Ein kontinuierlicher Austausch würde zur Verunreinigung des Rotorraumes durch Ablagerung von Rückständen aus dem Pumpmedium und zur Zerstörung des Gleitlagers führen.

Nachteilig an den bekannten Ventilen ist, daß sie sehr aufwendig sind und damit die Herstellungskosten der Pumpe stark belasten. Dabei ist außer dem in der US 3,395,644 gezeigten im Lagerschild angeordneten Ventil eine andere Ausführungsform bekannt, bei der die Welle mit einer Tieflochbohrung versehen und am Kopf der Welle ein Rückschlagventil angeordnet wird. Dabei ist insbesondere die Anfertigung der Tieflochbohrung aufwendig und teuer.

Aufgabe der Erfindung ist es daher, eine Kreiselmotorpumpe der eingangs genannten Art so zu verbessern, daß bei einfacher Konstruktion eine eine ausreichende Schmierung unter Verhinderung des kontinuierlichen Austausches von Pumpenmedium im Rotorraum gewährleistet ist.

Diese Aufgabe wird erfindungsgemäß durch eine Kreiselmotorpumpe mit den kennzeichnenden Merkmalen des Anspruch 1 gelöst.

Der besondere Vorteil der erfindungsgemäßen Pumpe ist, daß die Gleitringdichtung gleichzeitig die Funktion eines zwischen dem Rotorraum und dem Pumpenraum befindlichen Rückschlagventiles erfüllt. Dadurch kann auf das separate Rückschlagventil verzichtet werden, was zu einer Vereinfachung der Herstellung und zu einer Reduzierung der Kosten beiträgt. Die Ventilfunktion wird dadurch erreicht, daß der Gleitring in axialer Richtung verschieblich am Laufrad gehalten ist und bei einem Überdruck im Pumpraum gegenüber einem von der Membran bedeckten und mit dem Rotorraum in Verbindung stehenden Raum gegen die Kraft einer Feder von dem Gegelagerring abhebt. Ein eventuelle Überdruck im Rotorraum wird durch den im Vergleich zum Lagerspalt viel engeren Schiebesitz zwischen Laufrad und Welle abgebaut.

Von Vorteil ist außerdem, daß die Gleitringdichtung mit der dem Laufrad abgewandten Seite an dem Radiallager direkt anliegt. Dadurch entfällt ein separater Gegenlaufring, da diese Funktion vom vorhandenen Pumpenlager übernommen wird.

In einer besonderen Ausführungsform ist die Gleitringdichtung in einer Ausnehmung des Laufrades aufgenommen. Dadurch wird bei einfacher Herstellung und Montage eine geringere axiale Baulänge erzielt. Das Laufrad ist somit der Träger für die Gleitringdichtung mit einer statischen Abdichtung. Die Membran ist vorteilhafterweise als Gummi- oder Kunststoffmanschette ausgebildet, so daß eine besonders sicher Abdichtung und gute Drehmomentübertragung gewährleistet ist. Besonders vorteilhaft ist weiterhin, wenn die Gleitringdichtung mit dem Laufrad formschlüssig und/oder kraftschlüssig verbunden ist. Hierbei kann die Gleitringdichtung an ihrem äußeren Umfang eine Ausnehmung aufweisen, in der ein Vorsprung des Laufrades einliegt.

Vorzugsweise wird vorgeschlagen, daß das Laufrad und die Gleitringdichtung auf die Motorwelle aufschiebbar und durch einen Sicherungsring gehalten sind, der am Motorwellenende befestigt ist. Hierdurch wird die Montage erleichtert. Eine besonders einfache und funktionstüchtige Konstruktion wird dadurch geschaffen, daß die Gleitringdichtung einen ein- oder zweiteiligen Stützring aufweist. Hierbei kann der Stützring einen U-förmigen Querschnitt aufweisen, dessen Basis dem Laufrad zugewandt ist.

Eine besonders hohe Lebensdauer wird erreicht, wenn an oder innerhalb der Gleitringdichtung ein Ring aus Keramik gelagert ist, der an dem Radiallager anliegt. Hierbei kann der Keramikring durch eine Wellfeder gegen das Radiallager beaufschlagt sein. Dabei ist von Vorteil, wenn die Gummimanschette den Keramikring und die Außenseite des Stützrings übergreift.

Ein Ausführungsbeispiel der Erfindung ist in den Zeichnungen dargestellt und wird im folgenden näher beschrieben.

Es zeigen:

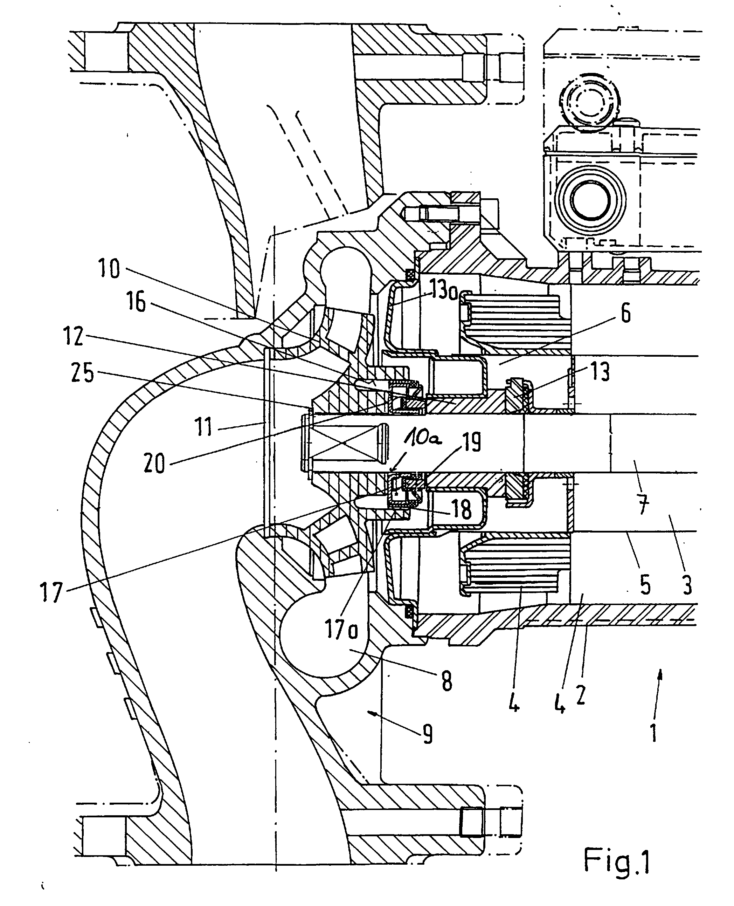

- **Figur 1:**: Einen axialen Schnitt durch eine Kreiselmotorpumpe und
- **Figur 2:**: einen Ausschnitt aus Figur 1 mit einer Gleitringdichtung.

Die Kreiselmotorpumpe weist einen Elektromotor 1 auf mit einem Gehäuse 2 und einem sich im Gehäuse drehenden Rotor 3, der von einem Stator 4 umgeben ist. Zwischen Rotor 3 und Stator 4 befindet sich ein Spaltrohr 5, so daß das in den Rotorraum 6 eindringende flüssige Pumpmedium gehalten wird. Der Rotor 3 sitzt auf einer koaxialen Welle 7, die in die Pumpenkammer 8 der Pumpe 9 hineinragt. Auf dem Ende der Welle 7 ist das Laufrad 10 befestigt, das auf der dem Motor abgewandten Seite mittig und koaxial die Flüssigkeit durch eine Saugöffnung 11 ansaugt.

Die Welle 7 ist zum einen an dem dem Laufrad 10 abgewandten Ende im Gehäuse 2 (nicht dargestellt) und zum andere nahe dem Laufrad 10 gelagert durch ein Radiallager 12 und ein daneben angeordnetes Axiallager 13. Das Radiallager 12 sitzt in der Öffnung einer Trennwand 13a (Lagerschild), welche die Pumpenkammer 8 von dem Rotorraum 6 trennt. Das Laufrad 10 weist auf der dem Motor 1 zugewandten Seite eine zylindrische koaxiale Ausnehmung 16 auf, die durch einen an der Laufradrückseite angespritzten buchsenförmigen Ring 17a gebildet ist, der an der Rückseite vorsteht. In der Ausnehmung 16 liegt eine Gleitringdichtung 17 ein, die koaxial auf der Welle 7 angeordnet ist. Diese weist einen äußeren Stützring 18 auf, dessen Außenseite an der Innenseite der Ausnehmung 16 anliegt. Der Stützring 18 kann mit dem Ring 17a formschlüssig und/oder kraftschlüssig verbunden. Für einen Formschluß müßte der Stützring 18 an seinem Außenumfang wenigstens eine Ausnehmung aufweisen, in der ein entsprechend geformter Vorsprung des Ringes 17a einliegen könnte.

Auf der dem Laufrad 10 abgewandten Seite besitzt die Gleitringdichtung 17 einen koaxialen vorstehenden Gleitring 19, der direkt an der Stirnseite des Radiallagers 12 anliegt und dort die erforderliche Abdichtung schafft. Dabei hat das Radiallagers 12 die Funktion eines Gegenlagerringes. Zwischen der Nabe 10a des Laufrades und der Gleitringdichtung 17 befindet sich innerhalb der Gleitringdichtung ein Federring 20, der den Gleitring 19 gegen den Gegenlagerring 12 drückt. Dieser Federring 20 kann eine Wellfeder sein.

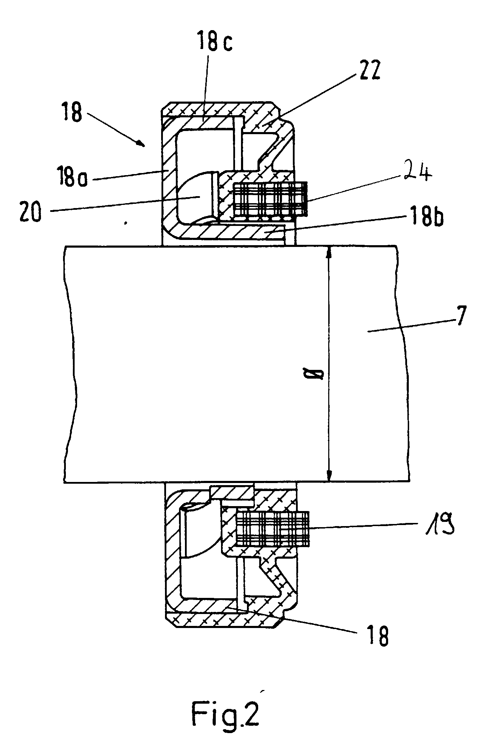

Wie Figur 2 zeigt besitzt der metallene Stützring 18 einen U-förmigen Querschnitt mit einer radialen, dem Laufrad zugewandten Basis 18a, einem zylindrischen inneren Bereich 18 b, der auf der Welle 7 sitzt und einem zylindrischen äußeren Bereich 18c, der an der Innenwand der Ausnehmung 16 anliegt, wobei zwischen dem Bereich 18c und der Ausnehmung 16 ein zylindrischer Bereich 21 einer Gummimanschette 22 angeordnet ist. Die Manschette 22 umgreift zudem den Gleitring 19 aus Keramik der innerhalb des Stützrings 18 liegt und mit seiner ringförmigen Stirnseite 24 an der Stirnseite des Radiallagers 12 anliegt.

Auf der dem Radiallager abgewandten Seite liegt am Gleitring 19 der Federring 20 in Form einer Wellfeder an, die den Gleitring 19 gegen das Radiallager drückt. Das Radiallager 12 sitzt somit im Preßsitz in der Ausnehmung 16 des Laufrades 10.

Zur Montage wird das Laufrad 10 zusammen mit der Gleitringdichtung 17 auf das Ende der Welle 7 aufgeschoben, die in die Pumpenkammer 8 hineinragt. Danach wird ein Sicherungsring 25 am Ende der Welle 7 befestigt, der ein Abrutschen des Laufrads 10 von der Welle verhindert.

Die Funktion des als Rückschlagventil wirkenden Gleitringdichtung ist wie folgt: Der Systemdruck im Pumpenraum (Überdruck zum Rotorraum) drückt auf die Gleitringdichtung und öffnet sie entgegen der Federkraft (z. B. Wellfeder) axial, so daß ein Spalt zwischen dem Gleitring 19 und dem Motorlager 12 entsteht. Durch diesen Spalt fließt Wasser über den Spalt zwischen der Welle 7 und dem Gegenlagerring 12 in den Rotorraum. Ist im Rotorraum und dem durch die Manschette 22 bedeckten Raum in der Gleitringdichtung der Druck aufgebaut, schließt die Gleitringdichtung unterstützt durch die Kraft der Wellfeder 20 und verschließt damit den Rotorraum 6 . Der Wasseraustausch zwischen dem Rotorraum und dem Pumpenraum ist weitestgehend verhindert. Ein geringfügiger Druckausgleich erfolgt über dem engen Schiebesitz zwischen der Laufradnabe lOa und der Welle 7.

## Patentansprüche

1. Kreiselmotorpumpe mit einem Spaltrohr (5), wobei die das Laufrad (10) tragende Welle (7) des Rotors (3) in einem ein Radiallager bildenden Gegenlagerring (12) gelagert ist und wobei das Laufrad (10) auf seiner dem Rotor (3) zugewandten Seite eine Gleitringdichtung (17) mit einem Gleitring (19) aufweist, der auf der Stirnseite des Gegenlagerringes (12) gleitend aufliegt und so den Pumpenraum (8) gegen den über den Lagerspalt zwischen der Welle (7) und dem Gegenlagerring (12) zugänglichen Rotorraum (6) abdichtet, und wobei der Gleitring (19) in axialer Richtung verschieblich am Laufrad (10) gehalten ist und von einer Federkraft gegen den Gegenlagerring (12) angelegt ist, dadurch gekennzeichnet daß zwischen dem Gleitring (19) und dem Laufrad (10) eine gummielastische Membran (22) angeordnet ist.

2. Kreiselmotorpumpe nach Anspruch 1, **dadurch gekennzeichnet,** daß die Gleitringdichtung (17) in einer dem Motor (1) zugewandten zylindrischen Ausnehmung (16) des Laufrades (10) vollständig oder teilweise einliegt.

3. Kreiselmotorpumpe nach Anspruch 1 oder 2, **dadurch gekennzeichnet,** daß die Gleitringdichtung (17) einen ein- oder zweiteiligen Stützring (18) aufweist.

4. Kreiselmotorpumpe nach Anspruch 3, **dadurch gekennzeichnet,** daß der Stützring (18) einen U-förmigen Querschnitt aufweist, dessen Basis (18a) dem Laufrad (10) zugewandt ist.

5. Kreiselmotorpumpe nach Anspruch 4, **dadurch gekennzeichnet,** daß die gummielastische Membran eine Manschette (22) aus Gummi oder Kunststoff ist, welche die Öffnung des U-förmigen Stützringes abdeckt.

6. Kreiselmotorpumpe nach einem der vorhergehenden Ansprüche, **dadurch gekennzeichnet**, daß der Gleitring (19) in einer Ausnehmung der Manschette (22) einliegt.

7. Kreiselmotorpumpe nach einem der vorhergehenden Ansprüche, **dadurch gekennzeichnet,** daß eine Feder, insbesondere eine Wellfeder (20), den Gleitring (19) beaufschlagt.

8. Kreiselmotorpumpe nach Anspruch 7, **dadurch gekennzeichnet**, daß die Wellfeder (20) im Boden des U-förmigen Stützringes (18) einliegt und den Gleitring (19) vermittels der dazwischenliegenden Manschette (22) beaufschlagt.

9. Kreiselmotorpumpe nach einem der vorhergehenden Ansprüche, **dadurch gekennzeichnet,** daß die Kraft der Feder (22) so bemessen ist, daß der Gleitring (19) bei einem Überdruck im Pumpenraum (8) gegenüber dem Rotorraum (6) vom Gegenlagerring (12) abrückt und den Durchfluß von Pumpenmedium in den Rotorraum ermöglicht.

10. Kreiselmotorpumpe nach einem der vorhergehenden Ansprüche, **dadurch gekennzeichnet**, daß die Gleitringdichtung (17) mit dem Laufrad (10) formschlüssig und/oder kraftschlüssig verbunden ist.

11. Kreiselmotorpumpe nach einem der vorhergehenden Ansprüche, **dadurch gekennzeichnet**, daß der Gleitring (19) ein Ring aus Keramik ist, der an dem Gegenlagerring (12) anliegt.

12. Kreiselmotorpumpe nach einem der vorhergehenden Ansprüche, **dadurch gekennzeichnet,** daß das Laufrad (10) und die Gleitringdichtung (17) auf die Motorwelle (7) aufschiebbar und durch einen Sicherungsring (25) gehalten sind, der am Motorwellenende befestigt ist.

## Claims

1. A motor-driven centrifugal pump having a can (5), wherein the shaft (7) of the rotor (3) bearing the impeller (10) is borne is a counter ring bearing (12) forming a radial bearing, the impeller (10) having on its side adjacent the rotor (3) a slide ring packing (17) having a slide ring (19) which bears slideably against the end face of the counter ring bearing (12), thus sealing the pump chamber (8) off from the rotor chamber (6) accessible via the bearing gap between the shaft (7) and the counter ring bearing (12), the slide ring (19) being retained displaceably on the impeller (10) in the axial direction and applied by a resilient force against the counter ring bearing (12),
**characterised in that** a rubber-elastic diaphragm (22) is disposed between the slide ring (19) and the impeller (10).

2. A motor-driven centrifugal pump according to claim 1,
**characterised in that** the slide ring packing (17) is completely or partially received in a cylindrical recess (16) of the impeller (10) adjacent the engine (1).

3. A motor-driven centrifugal pump according to claims 1 or 2,
**characterised in that** the slide ring packing (17) has a one-part or two-part supporting ring (18).

4. A motor-driven centrifugal pump according to claim 3,
**characterised in that** the supporting ring (18) has a U-shaped cross-section whose base (18a) is adjacent the impeller (10).

5. A motor-driven centrifugal pump according to claim 4,
**characterised in that** the rubber-elastic diaphragm is a rubber or plastics sleeve (22) which covers the opening of the U-shaped supporting ring.

6. A motor-driven centrifugal pump according to one of the preceding claims,
**characterised in that** the slide ring (19) is received in a recess of the sleeve (22).

7. A motor-driven centrifugal pump according to one of the preceding claims,
**characterised in that** a spring, more particularly a zigzag spring (20) acts upon the slide ring (19).

8. A motor-driven centrifugal pump according to claim 7,
**characterised in that** the zigzag spring (20) is received in the end of the U-shaped supporting ring (19) and acts upon the slide ring (19) by means of the sleeve (22) disposed therebetween.

9. A motor-driven centrifugal pump according to one of the preceding claims,
**characterised in that** the force of the spring (20) is so dimensioned that when there is an excess pressure in the pump chamber (8) in comparison with the rotor chamber (6) the slide ring (19) moves away from the counter ring bearing (12) and enables pumped medium to flow through into the rotor chamber.

10. A motor-driven centrifugal pump according to one of the preceding claims,
**characterised in that** the slide ring packing (17) is connected positively and/or non-positively to the impeller (10).

11. A motor-driven centrifugal pump according to one of the preceding claims,
**characterised in that** the slide ring (19) is a ceramic ring which bears against the counter ring bearing (12).

12. A motor-driven centrifugal pump according to one of the preceding claims,
**characterised in that** the impeller (10) and the slide ring packing (17) can be slid on to the engine shaft (17) and are retained by a retaining ring (25) attached to the end of the engine shaft.

## Revendications

1. Motopompe centrifuge avec une gaine (5), l'arbre (7) du rotor (3) portant la roue mobile (10) étant monté dans une bague de butée (12) formant un palier radial et la roue mobile (10) présentant, sur sa face tournée vers le rotor (3), une garniture d'étanchéité à anneau glissant (17) avec un anneau de glissement (19) qui est en appui glissant sur la face frontale de la bague de butée (12) et rend ainsi étanche le volume de pompe (8) par rapport au volume de rotor (6) accessible par la fente de palier entre l'arbre (7) et la bague de butée (12), et l'anneau de glissement (19) étant maintenu coulissant en direction axiale sur la roue mobile (10) et étant maintenu contre la bague de butée (12) par une force de ressort,
caractérisée en ce qu'une membrane (22) à élasticité de caoutchouc est disposée entre l'anneau de glissement (19) et la roue mobile (10).

2. Motopompe centrifuge selon la revendication 1,
caractérisée en ce que la garniture d'étanchéité à anneau glissant (17) est logée complètement ou partiellement dans un évidement (16) cylindrique de la roue mobile (10) tourné vers le moteur (1).

3. Motopompe centrifuge selon la revendication 1 ou 2,
caractérisée en ce que la garniture d'étanchéité à anneau glissant (17) présente une bague d'appui (18) en une ou deux parties.

4. Motopompe centrifuge selon la revendication 3,
caractérisée en ce que la bague d'appui (18) présente une section transversale en forme de U dont la base (18a) est tournée vers la roue mobile (10).

5. Motopompe centrifuge selon la revendication 4,
caractérisée en ce que la membrane à élasticité de caoutchouc est une manchette (22) en caoutchouc ou matière synthétique qui recouvre l'ouverture de la bague d'appui en forme de U.

6. Motopompe centrifuge selon l'une des revendications précédentes,
caractérisée en ce que l'anneau de glissement (19) est logé dans un évidement de la manchette (22).

7. Motopompe centrifuge selon l'une des revendications précédentes,
caractérisée en ce qu'un ressort, en particulier une rondelle ondulée (20), agit sur la bague de glissement (19).

8. Motopompe centrifuge selon la revendication 7,
caractérisée en ce que la rondelle ondulée (20) est logée dans le fond de la bague d'appui (18) en forme de U et agit sur la bague de glissement (19) par l'intermédiaire de la manchette (22) disposée entre elles.

9. Motopompe centrifuge selon l'une des revendications précédentes,
caractérisée en ce que la force du ressort (22) est dimensionnée de telle manière que la bague de glissement (19), dans le cas d'une surpression dans le volume de pompe (8) par rapport au volume de rotor (6), s'écarte de la bague de butée (12) et permet le passage de fluide de pompe dans le volume de rotor.

10. Motopompe centrifuge selon l'une des revendications précédentes,
caractérisée en ce que la garniture d'étanchéité à anneau glissant (17) est reliée à la roue mobile (10) par engagement positif et/ou par adhérence.

11. Motopompe centrifuge selon l'une des revendications précédentes,
caractérisée en ce que l'anneau de glissement (19) est une bague en céramique qui est en appui sur la bague de butée (12).

12. Motopompe centrifuge selon l'une des revendications précédentes,
caractérisée en ce que la roue mobile (10) et la garniture d'étanchéité à anneau glissant (17) sont coulissantes sur l'arbre (7) du moteur et sont maintenues par un circlip (25) qui est fixé à l'extrémité de l'arbre du moteur.
